# EUROPEAN PATENT APPLICATION

(11) **EP 3 434 519 A1**
(43) Date of publication of application: **30.01.2019**
(21) Application number: 17203250.0
(22) Date of filing: 23.11.2017
(51) Int. Cl.: B60Q 1/10

(54) **VEHICLE ILLUMINATION DEVICE**

(30) Priority: 28.07.2017 TW 106125520
(71) Applicant: Depo Auto Parts Ind. Co., Ltd., Lukang Township, Changhua County 505 (TW)
(72) Inventor: GUO, Ming-Syun, Tainan City (TW)
(74) Representative: Viering, Jentschura & Partner mbB Patent- und Rechtsanwälte

(57) **Abstract**

Disclosed is a vehicle illumination device (Z) which includes a support mount (1), a driving unit (2), an adjusting mechanism (3), and a lens assembly (4). The driving unit (2) and the adjusting mechanism (3) are arranged on the support mount (1). The adjusting mechanism (3) is configured to be driven by the driving unit (2) to adjust a tilt angle of the lens assembly (4) relative to a horizontal reference plane. Whereby, when traveling uphill and downhill, the driver's view distance can be increased and the blind spots can be reduced.

## Description

### BACKGROUND OF THE INVENTION

### 1. Field of the Invention

The instant disclosure relates to an illumination device, and more particularly to a vehicle illumination device.

### 2. Description of Related Art

The headlamp, referred to by some as the "eyes" of a car, is very important to traffic safety. The conventional headlamp was mounted at a fixed angle and thus the illumination angle thereof cannot be changed. This may result in a narrow view region of a driver when traveling uphill and downhill and making a turn. Under this circumstance, it would be hard for the driver to quickly react to unforeseen road conditions, thereby increasing the risk of traffic accidents, especially when traveling at night in the absence of street lights.

With the improvement of car technology, more and more attention has been paid to traffic safety. To increase traffic safety, major car factories have developed headlamp devices with adjustable lighting angles, which can be used with a vehicle computer system to provide a road-adaptive illumination for the driver. However, the conventional transmission mechanism in the headlamp device is a rather complicated mechanism, which cannot meet the miniaturization requirement and often occupy large amounts of space. In addition, such a complicated mechanical design may also result in ineffective operation, which may in turn cause an improper rotation of the headlamp and lose stability. For example, the headlamp device as disclosed in Chinese Patent No. 201291803Y still has the above-mentioned problems.

### SUMMARY OF THE INVENTION

One aspect of the instant disclosure relates to a vehicle illumination device using a single-axis illumination angle adjusting mechanism to simplify the conventional transmission mechanism in a vehicle lamp device and increase vehicle space utilization.

One of the embodiments of the instant disclosure provides a vehicle illumination device which includes a support mount, a driving unit, an adjusting mechanism, and a lens assembly. The driving unit is arranged on the support mount. The adjusting mechanism includes a slide and swing assembly arranged on the support mount and a pivot joint assembly arranged on the support mount opposite to the slide and swing assembly. The slide and swing assembly includes a guide rail, a connecting holder driven by the driving unit to slide on the guide rail, and a shaft body connected to the connecting holder. The lens assembly has a top end connected to the pivot joint assembly and a bottom end pivoted on the shaft body. The adjusting mechanism is configured to be driven by the driving unit to adjust a tilt angle of the lens assembly relative to a horizontal reference plane.

Furthermore, the connecting holder includes a slide block coupled to the guide rail and a ball socket formed on the slide block and connected to the shaft body.

Furthermore, the pivot joint assembly includes a connecting plate, a first rotation element, a first limiting sleeve, and a stop element. The connecting plate has a support shaft passing through an open slot of the support mount. The first rotation element is mounted for rotation on the support shaft. The first limiting sleeve is connected to a top end of the support mount to provide a buffer space together with the open slot to accommodate the first rotation element, and to enable a tilting movement of the first rotation element and the support shaft. The stop element is engaged to the support shaft to secure the first rotation element.

Furthermore, the bottom end of the lens assembly includes two connecting sleeves, the slide and swing assembly includes two second rotation elements and two limiting sleeves, and two ends of the shaft body each have a pivot shaft. The two second rotation elements are respectively mounted for rotation on the two pivot shafts, and the two limiting sleeves are respectively connected to the two connecting sleeves. Each of the two limiting sleeves and the corresponding connecting sleeve provides an accommodation space to accommodate the corresponding second rotation element.

Based on the above, the vehicle illumination device according to the disclosure has the slide and swing assembly and the pivot joint assembly that are arranged on the support mount and opposite to each other. The slide and swing assembly includes a guide rail, a connecting holder driven by the driving unit to slide on the guide rail, and a shaft body connected to the connecting holder. Accordingly, the adjustment of an illumination angle of the lens assembly with high accuracy and high stability can be ensured, the conventional transmission mechanism in a vehicle lamp device can be simplified, and the internal space utilization rate of the support mount can be enhanced.

To further understand the techniques, means and effects of the instant disclosure, the following detailed descriptions and appended drawings are hereby referred to, such that, and through which, the purposes, features and aspects of the instant disclosure can be thoroughly and concretely appreciated. However, the appended drawings are provided solely for reference and illustration, without any intention to limit the instant disclosure.

### BRIEF DESCRIPTION OF THE DRAWINGS

The accompanying drawings are included to provide a further understanding of the instant disclosure, and are incorporated in and constitute a part of this specification. The drawings illustrate exemplary embodiments of the instant disclosure and, together with the description, serve to explain the principles of the instant disclosure.
FIG. 1 is a three-dimensional schematic view of the vehicle illumination device of the instant disclosure;
FIGS. 2 and 3 are exploded schematic views of the vehicle illumination device being respectively without the pivot joint assembly and the lens assembly and being taken from different view angles;
FIG. 4 is an exploded schematic view of the vehicle illumination device;
FIG. 5 is a schematic view showing an unused state of the vehicle illumination device;
FIG. 6 is a schematic view showing a use state of the vehicle illumination device;
FIG. 7 is a schematic view showing another use state of the vehicle illumination device; and
FIGS. 8 and 9 are schematic views showing a vehicle using the vehicle illumination device in uphill and downhill road conditions, respectively.

### DETAILED DESCRIPTION OF THE PREFERRED EMBODIMENTS

Embodiments of a vehicle illumination device according to the instant disclosure are described herein. Other advantages and objectives of the instant disclosure can be easily understood by one skilled in the art from the disclosure. The instant disclosure can be applied in different embodiments. Various modifications and variations can be made to various details in the description for different applications without departing from the scope of the instant disclosure. The drawings of the instant disclosure are provided only for simple illustrations, but are not drawn to scale and do not reflect the actual relative dimensions. The following embodiments are provided to describe in detail the concept of the instant disclosure, and are not intended to limit the scope thereof in any way.

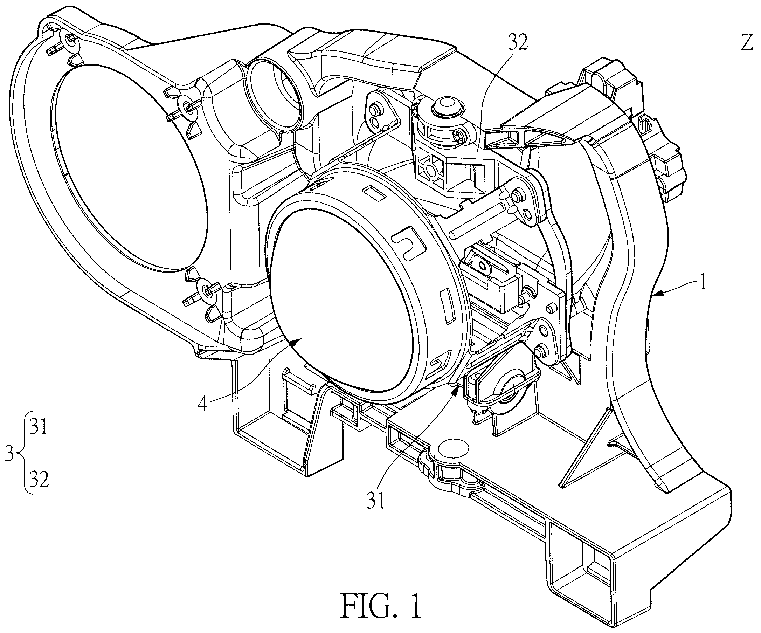

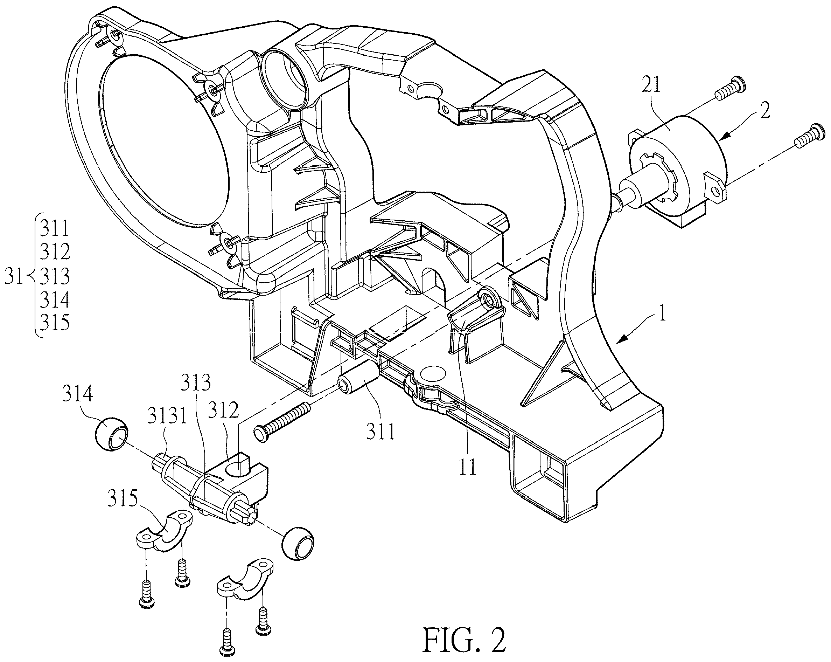

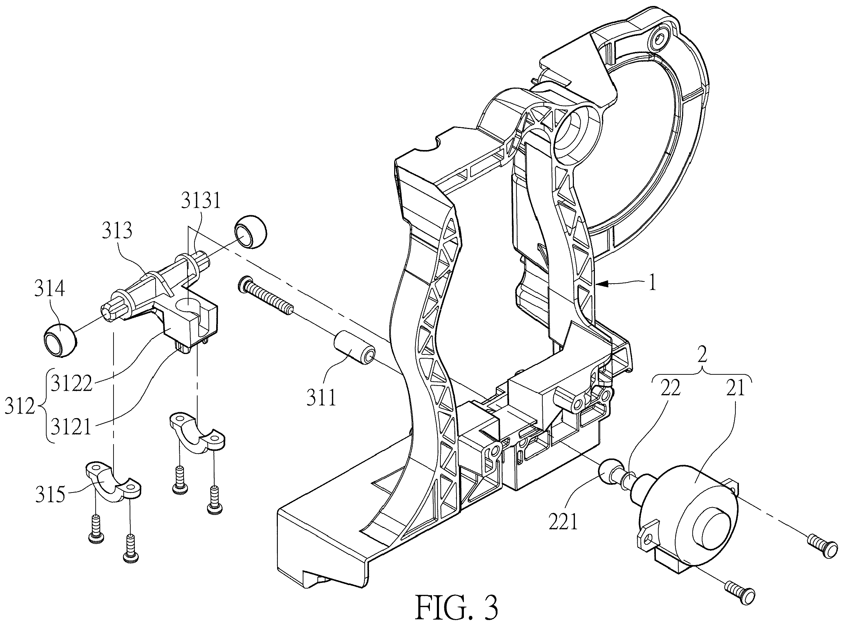

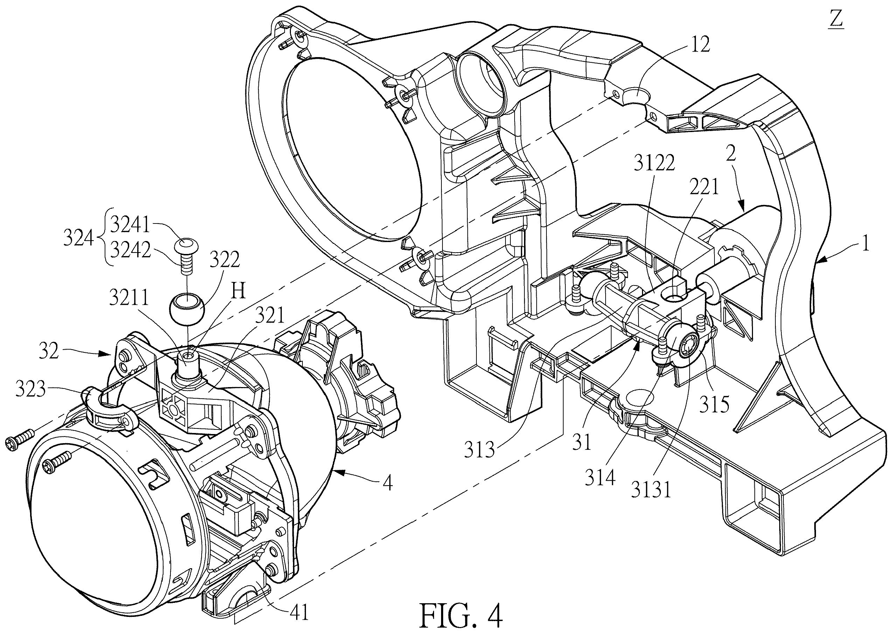

Please refer to FIGS. 1 to 4, FIG. 1 is a three-dimensional schematic view, FIGS. 2 and 3 are partially exploded schematic views, and FIG. 4 is an exploded schematic view. An embodiment of the present invention provides a vehicle illumination device Z which includes a support mount 1, a driving unit 2, an adjusting mechanism 3, and a lens assembly 4. The driving unit 2 and the adjusting mechanism 3 are arranged on the support mount 1. The adjusting mechanism 3 is configured to be driven by the driving unit 2 to adjust a tilt angle of the lens assembly 4 relative to a horizontal reference plane. That is to say, the adjusting mechanism 3 can enable a tilt-up or tilt-down movement of the lens assembly 4. Accordingly, the vehicle illumination device Z can be used with an automatic control system (not shown) to provide automatic adjustment of illumination angle according to different road conditions and external environmental conditions. Therefore, a good illumination can be obtained in a situation with poor visibility to ensure traffic safety.

For the instant embodiment, the support mount 1 includes a frame-type main body which provides sufficient space for installation of the driving unit 2, the adjusting mechanism 3, and the lens assembly 4 including a lens, a reflector, a light source, etc. Accordingly, the driving unit 2, the adjusting mechanism 3, and the lens assembly 4 can be easily incorporated in a vehicle headlamp by the support mount 1. The driving unit 2 is configured to actuate the adjusting mechanism 3. The driving unit 2 includes an actuator 21 (i.e., a linear drive motor) and a ball rod 22 connected to the actuator 21, wherein the ball rod 22 can be controlled by the actuator 22 to perform a forward or backward movement along a horizontal axis. In practice, the driving unit 2 is installed on one side of the support mount 1 by at least one fixing member, such as a fixing screw (not numbered), but is not limited thereto.

The driving unit 2 and the adjusting mechanism 3 are mechanically connected together. The adjusting mechanism 3 includes a slide and swing assembly 31 and a pivot joint assembly 32 both arranged on another side (i.e., a side facing the driving unit 2) of the support mount 1. The slide and swing assembly 31 is connected to the bottom end of the lens assembly 4, and the pivot joint assembly 32 is pivoted on the top end of the lens assembly 4. Accordingly, the slide and swing assembly 31 can support the lens assembly 4, and be driven by the driving unit 2 to move close to or away from the driving unit 2 to enable a tilt-up or tilt-down movement of the lens assembly 4 so as to change an illumination angle.

More specifically, the slide and swing assembly 31 is located on the bottom end of the support mount 1 and coaxial to the driving unit 2, and the bottom end of the support mount 1 has a fixing bracket 11 which is arranged parallel to a working path of the driving unit 2. The slide and swing assembly 31 includes a guide rail 311, a connecting holder 312, and a shaft body 313. The guide rail 311 is mounted on the fixing bracket 11. The connecting holder 312 is drivingly connected to the actuator 21 by the ball rod 22, and is driven by the ball rod 22 to reciprocately slide on the guide rail 311. The shaft body 313 is connected to and moves together with the connecting holder 312. In practice, the guide rail 311 is cylindrical in shape and the fixing bracket 11 has a U-shaped slot (not numbered). The guide rail 311 is positioned in the U-shaped slot by at least one fixing member, such as a fixing screw (not numbered), but is not limited thereto.

The connecting holder 312 includes a slide block 3121 and a ball socket 3122. The slide block 3121 has a shape matching the cross-sectional shape of the exposed portion of the guide rail 311. The ball socket 3122 is configured to engage with a ball head 221 of the ball rod 22 to form a ball joint. That is to say, the ball socket 3122 can limit the movement of the ball head 221 and allows rotation of the ball head 221. The shaft body 313 extends from the ball socket 3122 towards a direction away from the driving unit 2, and the extension direction is perpendicular to that of the ball socket 3122. Accordingly, a driving force provided by the driving unit 2 and the smooth swing operation of the lens assembly 4 can be reliably transmitted.

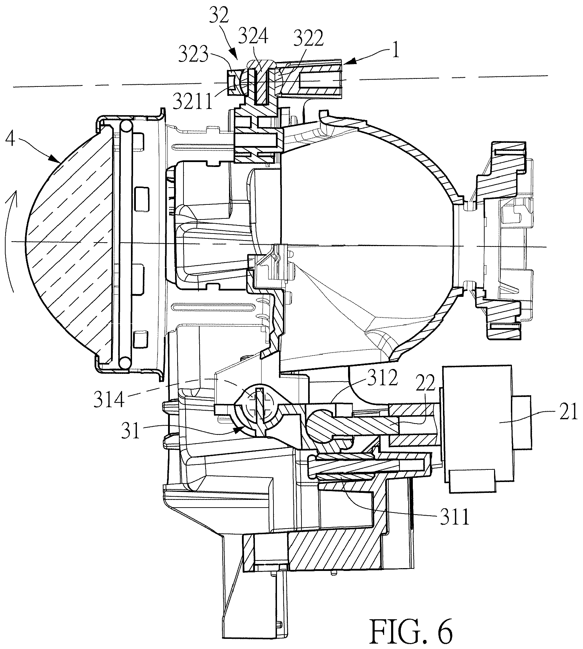

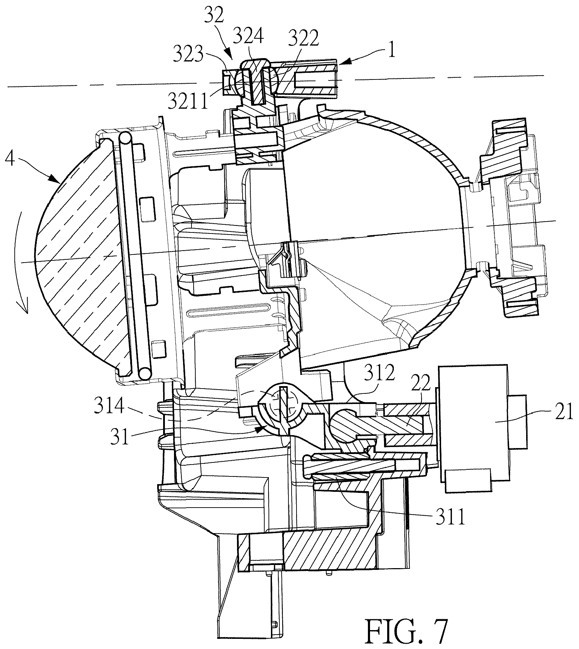

The pivot joint assembly 32 is located on the top end of the support mount 1 and coaxial to the shaft body 33, and the top end of the support mount 1 has an open slot 12. The pivot joint assembly 32 includes a connecting plate 321, a first rotation element 322, a first limiting sleeve 323, and a stop element 324. The connecting plate 321 has a support shaft 3211 and the first rotation element 322 is mounted for rotation on the support shaft 3211. The first limiting sleeve 323 is connected to the top end of the support mount 1 to provide a buffer space together with the open slot 12 to accommodate the first rotation element 322. The stop element 324 is engaged to the support shaft 3211 to secure the first rotation element 322. It should be noted that, in the pivot joint assembly 32, the support shaft 3211 passes through the buffer space and the first rotation element 322 can rotate relative to the support shaft 3211, and the first rotation element 322 has a residual gap in the buffer space. Accordingly, a tilting movement of the first rotation element 322 and the support shaft 3211 relative to the support mount 1, as shown in FIGS. 6 and 7, is enabled when the lens assembly 4 is tilted up and down.

In practice, the support shaft 3211 forwardly extends from the center of the top end of the connecting plate 321 and has an installation hole H. The first rotation element 322 used in this embodiment is, but not limited to, a drilled ball. The first limiting sleeve 323 is approximately U-shaped and faces the open slot 12. The first limiting sleeve 323 is fixed to the top end of the support mount 1 by at least one fixing member, such as a fixing screw (not numbered). The stop element 324 is approximately T-shaped and includes a stop portion 3241 and an engage portion 3242 extending from the stop portion 3241. The first rotation element 322 can be retained in the buffer space when the engage portion 3242 of the stop element 324 is inserted into the installation hole H of the support shaft 3211.

For connecting the lens assembly 4 to the slide and swing assembly 31, the bottom end of the lens assembly 4 includes two connecting sleeves 41, the slide and swing assembly 31 further includes two second rotation elements 314 and two limiting sleeves 315, and two ends of the shaft body 313 each have a pivot shaft 3131. More specifically, the two second rotation elements 314 are respectively mounted for rotation on the two pivot shafts 3131. The two limiting sleeves 315 are respectively connected to the two connecting sleeves 41, wherein each of the two limiting sleeves 315 and the corresponding limiting sleeve 41 provides an accommodation space to accommodate the corresponding second rotation element 314. Accordingly, the connecting sleeves 41 can be pivoted with respect to the pivot shaft 3131. Therefore, the adjustment of an illumination angle of the lens assembly 4 with high accuracy and high stability can be ensured.

In practice, the second rotation element 314 used in this embodiment is, but not limited to, a drilled ball. The second limiting sleeve 315 is approximately U-shaped. The second limiting sleeve 315 and the connecting sleeves 41 are connected together by at least one fixing member, such as a fixing screw (not numbered).

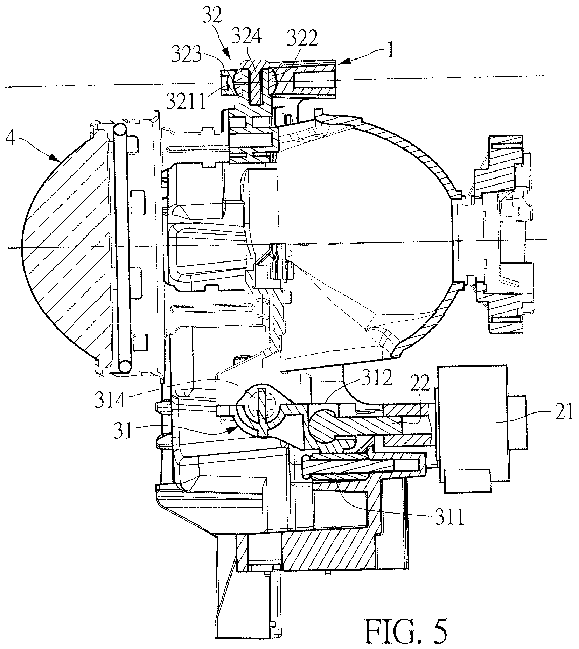

Please refer to FIGS. 5 to 7 which show different operative positions of the vehicle illumination device. As shown in FIG. 5, if the ball rod 22 is not driven to perform a forward or backward motion, a tilt-up or tilt-down movement of the lens assembly 4 cannot be achieved, and an optical axis of the lens assembly 4 is substantially parallel to a horizontal reference plane. As shown in FIG. 6, if the ball rod 22 is driven by the actuator 21 to perform a forward motion, a tilt-up movement of the lens assembly 4 with a predetermined angle can be achieved. As shown in FIG. 7, if the ball rod 22 is driven by the actuator 21 to perform a backward motion, a tilt-down movement of the lens assembly 4 with a predetermined angle can be achieved.

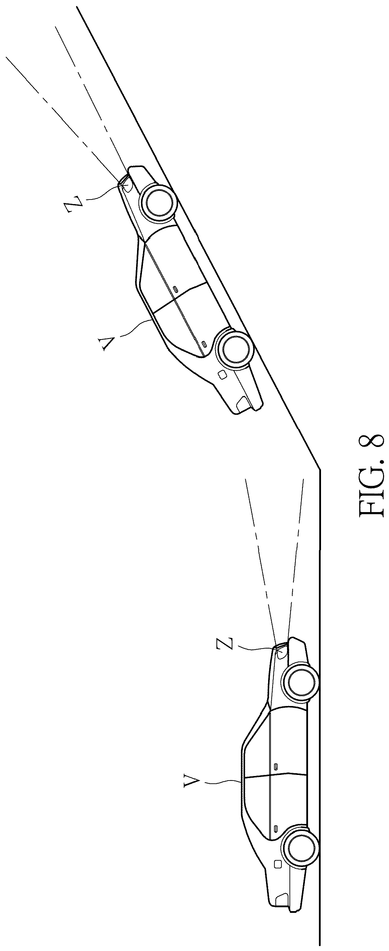

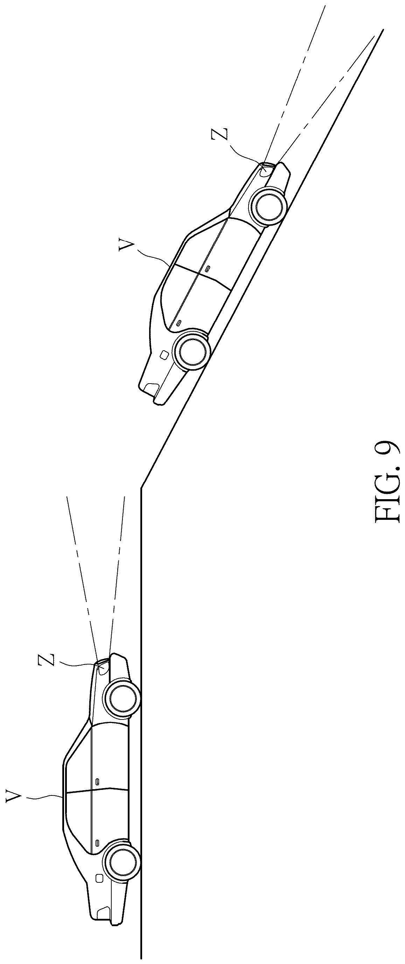

Please refer to FIGS. 8 and 9. When a vehicle V travels uphill, the vehicle illumination device Z thereon can be controlled by an automatic control system to immediately perform a tilt-up movement of the lens assembly 4 with a predetermined angle to provide a relative upward illumination and to improve uphill visibility. Similarly, when a vehicle V travels downhill, the vehicle illumination device Z thereon can be controlled by an automatic control system to immediately perform a tilt-down movement of the lens assembly 4 with a predetermined angle to provide a relative downward illumination and to improve downhill visibility. Therefore, the driver's view distance can be increased and the number of blind spots can be reduced.

Based on the above, the vehicle illumination device according to the disclosure can provide automatic adjustment of illumination angles according to different road conditions and external environmental conditions. Therefore, when traveling uphill or downhill, the driver's view distance can be increased and the number of blind spots can be reduced to ensure traffic safety.

Furthermore, the vehicle illumination device according to the disclosure has the slide and swing assembly and the pivot joint assembly that are arranged on the support mount and opposite to each other, and the slide and swing assembly includes a guide rail, a connecting holder driven by the driving unit to slide on the guide rail, and a shaft body connected to the connecting holder. Accordingly, the adjustment of an illumination angle of the lens assembly with high accuracy and high stability can be ensured, the conventional transmission mechanism in a vehicle lamp device can be simplified, and the internal space utilization rate of the support mount can be enhanced.

In addition, the positional difference of the lens assembly during the tilt-up or tilt-down operation can be absorbed by gaps between the parts.

The aforementioned descriptions merely represent the preferred embodiments of the instant disclosure, without any intention to limit the scope of the instant disclosure which is fully described only within the following claims. Various equivalent changes, alterations or modifications based on the claims of the instant disclosure are all, consequently, viewed as being embraced by the scope of the instant disclosure.

## Claims

1. A vehicle illumination device (Z), comprising:
a support mount (1);
a driving unit (2) arranged on the support mount (1);
an adjusting mechanism (3), including:
a slide and swing assembly (31) arranged on the support mount (1), wherein the slide and swing assembly (31) includes a guide rail (311), a connecting holder (312) driven by the driving unit (2) to slide on the guide rail (311), and a shaft body (313) connected to the connecting holder (312); and
a pivot joint assembly (32) arranged on the support mount (1) opposite to the slide and swing assembly (31); and
a lens assembly (4) having a top end connected to the pivot joint assembly (32) and a bottom end pivoted on the shaft body (313);
whereby the adjusting mechanism (3) is configured to be driven by the driving unit (2) to adjust a tilt angle of the lens assembly (4) relative to a horizontal reference plane.

2. The vehicle illumination device of claim 1, wherein the connecting holder (312) includes a slide block (3121) coupled to the guide rail (311) and a ball socket (3122) formed on the slide block (3121) and connected to the shaft body (313).

3. The vehicle illumination device of claim 1, wherein the pivot joint assembly (32) includes:
a connecting plate (321) having a support shaft (3211) passing through an open slot (12) of the support mount (1);
a first rotation element (322) mounted for rotation on the support shaft (3211);
a first limiting sleeve (323) connected to a top end of the support mount (1) to provide a buffer space together with the open slot (12) to accommodate the first rotation element (322), and to enable a tilting movement of the first rotation element (322) and the support shaft (3211); and
a stop element (324) engaged to the support shaft (3211) to secure the first rotation element (322).

4. The vehicle illumination device of claim 1, wherein the bottom end of the lens assembly (4) includes two connecting sleeves (41) and the slide and swing assembly (31) includes two second rotation elements (314) and two limiting sleeves (315), two ends of the shaft body (313) each have a pivot shaft (3131) and the two second rotation elements (314) are respectively mounted for rotation on the two pivot shafts (3131), and the two limiting sleeves (315) are respectively connected to the two connecting sleeves (41), and wherein each of the two limiting sleeves (315) and the corresponding connecting sleeve (41) provides an accommodation space to accommodate the corresponding second rotation element (314).
